# EUROPÄISCHE PATENTSCHRIFT

(11) **EP 1 701 563 B1**
(45) Veröffentlichungstag und Bekanntmachung des Hinweises auf die Patenterteilung: **04.09.2013**
(21) Anmeldenummer: 06110514.4
(22) Anmeldetag: 28.02.2006
(51) Int. Cl.: H04W 76/04, H04W 88/02

(54) **Mobilfunkendgerät mit deaktivierbarer Sendeeinheit und Netzleitestelle zum Steuern des Mobilfunkendgerätes**
Mobile station with a transmitter capable of being deactivated and network node for controlling the mobile station
Terminal mobile avec un transmetteur capable d'être désactivé et unité de réseau pour contrôler le terminal mobile

(30) Priorität: 08.03.2005 DE 102005011073
(43) Veröffentlichungstag der Anmeldung: 13.09.2006
(73) Patentinhaber: Vodafone Holding GmbH, 40213 Düsseldorf (DE)
(72) Erfinder: Holzer, Harald, 76698 Ubstadt-Weiher (DE); Schmitz, Peter, 64354 Reinheim (DE)
(74) Vertreter: Ring & Weisbrodt

(56) Entgegenhaltungen:
- EP-A1- 1 069 705
- EP-A1- 1 164 808
- EP-A2- 1 484 937
- WO-A1-00/25449
- WO-A1-2004/023736
- US-A1- 2002 065 070
- US-A1- 2003 104 819

## Beschreibung

### Technisches Gebiet

Die Erfindung betrifft ein Mobilfunkendgerät für ein Mobilfunknetz, insbesondere nach dem GSM-, UMTS- und OFDM-Standard, wobei ein Mobilfunkteilnehmer mit dem Mobilfunkendgerät Mitglied einer Gruppe von Mobilfunkteilnehmern ist, deren Kommunikation von einer Netzleitstelle koordiniert wird, und das Mobilfunkendgerät enthält:
a) eine Empfangs- und Sendeeinheit,
b) einen Mikroprozessor und einen Arbeitsspeicher,
c) eine Bedieneinheit zum Bedienen des Mobilfunkendgeräts und
d) Mittel zum Aktivieren und/oder Deaktivieren der Sendeeinheit.

Ferner betrifft die Erfindung eine Netzleitstelle, welche über ein Mobilfunknetz, insbesondere nach dem GSM- oder UMTS-Standard, mit wenigstens einem Mobilfunkendgerät mit einer deaktivierbaren Sendeeinheit und aus einer Gruppe von Mobilfunkteilnehmern gekoppelt ist, enthaltend:
a) wenigstens einen Kommunikationsserver mit einem Prozessor und einem Arbeitsspeicher, und
b) Mittel zum synchronen Übermitteln von Information an die Mobilfunkendgeräte der Gruppe von Mobilfunkteilnehmern.

### Stand der Technik

Mobilfunkendgeräte erlauben es Mobilfunkteilnehmern, über ein Mobilfunknetz, beispielsweise nach dem GSM- oder UMTS-Standard, mit anderen Kommunikationspartnern, die ebenfalls über ein Mobilfunkendgerät oder auch ein Festnetzgerät verfügen, zu kommunizieren. Die Kommunikation erfolgt dabei über die Funkschnittstelle.

Das Mobilfunkendgerät verfügt über eine Empfangs- und Sendeeinheit, mit denen es eine Verbindung zu den Funkmasten des Mobilfunknetzes aufbaut. Ankommende Funksignale werden durch das Empfangsteil aufgenommen, abgehende Funksignale werden durch die Sendeeinheit weitergeleitet. Die Betreiber des Mobilfunknetzes tragen Sorge dafür, dass die Verbindung zu dem gewünschten anderen Kommunikationspartner hergestellt wird.

Das Mobilfunknetz verfügt über zahlreiche Funkmasten, so genannte "Base Stations" (BS). Der Abdeckungsbereich von solchen Funkmasten wird als Funknetzzelle bezeichnet. Die Koordination von Kommunikationsanfragen und Herstellung einer Verbindung erfolgt über einen Base Station Controller (BSC) und eine Vermittlungsstelle, dem so genannten Mobile Switching Center (MSC).

Es gibt sensible Bereiche, wie bspw. Krankenhäuser oder Flugzeuge, in denen die Sendeleistung der Mobilfunkendgeräte andere elektronische Apparate und Instrumente beeinflussen. Dies hat in der Vergangenheit dazu geführt, dass diese elektronischen Geräte ganz oder teilweise ausgefallen sind. Es wird daher im Eingangsbereich dieser sensiblen Bereiche darauf hingewiesen, dass die Mobilfunkendgeräte auszuschalten sind. In Flugzeugen wurde sogar vom Gesetzgeber untersagt, Mobilfunkendgeräte einzuschalten.

Mittlerweile wird das Mobilfunkendgerät in Form von Handys vielfach von Ärzten, Feuerwehrleuten, Polizei und dergleichen benutzt. Diese Personenkreise müssen unter Umständen auch in diesen sensiblen Bereichen immer erreichbar bleiben. Polizei oder auch die Feuerwehr, also Personen, die sich oft in sensiblen Bereichen aufhalten müssen, sind derzeit nicht in der Lage mit dem Mobilfunkendgerät Anweisung von einer Leitstelle in Empfang zu nehmen.

In der US 2002/0065070 A1 ein Mobilfunkendgerät mit einem Schalter zum Deaktivieren bzw. Aktivieren einer Sendeeinheit des Mobilfunkendgeräts beschrieben. Der Schalter kann entweder manuell oder automatisch bei Empfang eines Signals von einem entsprechenden Sender betätigt werden. Bei ausgeschalteter Sendeeinheit ist ein Ausstrahlen von Funksignalen durch das Mobilfunkendgerät nicht mehr möglich. Andere Funktionen des Mobilfunkendgeräts, wie beispielsweise ein Empfangen von Nachrichten, lassen sich aber weiterhin ausführen.

Die EP 1 484 937 A2 offenbart ein Mobilfunkendgerät, das neben einem ausgeschalteten Zustand zusätzlich über einen Standby-Modus verfügt. Im Standby-Modus ist das Mobilfunkendgerät nicht betriebsbereit, kann aber durch eine Leitungsvermittlungsvorrichtung im Telekommunikationsnetz eingeschaltet werden. Dazu hinterlegt ein Nutzer des Mobilfunkendgeräts Rufnummern anderer Teilnehmer, bei deren Anruf ein Einschalten des Mobilfunkendgeräts ermöglicht wird, in einer Datenbank des Telekommunikationsnetzes. Bei einem Anruf prüft die Leitungsvermittlungsvorrichtung, ob das Mobilfunkendgerät in einem Standby-Modus ist und ob der Anrufer in der Datenbank registriert ist. Fall dieses der Fall ist, kann der Anrufer die Leistungsvermittlungsvorrichtung dazu veranlassen, das Mobilfunkendgerät einzuschalten und dann eine Verbindung zum Mobilfunkendgerät herzustellen.

### Offenbarung der Erfindung

Aufgabe der Erfindung ist es daher, die bekannten Nachteile des Standes der Technik zu überwinden und ein Mobilfunkendgerät zu schaffen, welches auch in funksensiblen Bereichen benutzbar ist. Es ist ferner Aufgabe der Erfindung, Teilnehmer einer Gruppe von Mobilfunkteilnehmern auch in diesen sensiblen Bereichen Informationen übermitteln zu können.

Erfindungsgemäß wird die Aufgabe bei einem Mobilfunkendgerät der eingangs genannten Art für ein Mobilfunknetz, insbesondere nach dem GSM- und UMTS-Standard, gelöst durch
e) Mittel zur Generierung von Daten bezüglich der Zeit, des Aufenthaltsorts und der Identität des Mobilfunkendgeräts bei einer Deaktivierung der Sendeeinheit und zur Übermittlung dieser Daten an die Netzleitstelle vor einer Abschaltung der Sendeeinheit, und
f) eine Rufaufforderungseinheit zum Feststellen einer Aufforderung der Netzleitstelle zum Einschalten der Sendeeinheit und zum Aufnehmen einer Verbindung mit der Netzleitstelle bei deaktivierter Sendeeinheit, und zum Erzeugen eines Alarmsignals bei einer festgestellten Aufforderung.

Weiterhin wird die Aufgabe durch eine Netzleitstelle der eingangs genannten Art dadurch gelöst, dass
c) Erfassungs- und Speichermittel vorgesehen sind, zum Erfassen und Speichern von Informationen bezüglich des Aufenthaltsortes, der Zeit und der Identifikation von Mobilfunkteilnehmern der Gruppe in dem Kommunikationsserver beim Abschalten der Sendeeinheit des Mobilfunkendgeräts, und
d) die Netzleitstelle zum Übermitteln einer Aufforderung an das Mobilfunkendgerät zum Einschalten der Sendeeinheit und zum Aufnehmen einer Verbindung mit der Netzleitstelle während ausgeschalteter Sendeeinheit des Mobilfunkendgeräts ausgebildet ist.

Die Erfindung beruht auf dem Prinzip, die Mobilfunkendgeräte derart auszugestalten, dass ihre Sendeeinheit separat ausschaltbar ist. Durch diese Maßnahme wird vermieden, dass das Mobilfunkendgerät, obwohl es eingeschaltet ist, Funksignale sendet und andere insbesondere elektronischen Apparate und Instrumente durch seine elektromagnetischen Strahlen störend beeinflusst. Damit kann ein Mobilfunkteilnehmer weiterhin erreicht werden, da lediglich die Sendeeinheit deaktiviert ist. Ein vollständiges Ausschalten des Mobilfunkendgeräts in funksensiblen Bereichen entfällt bei der vorliegenden Erfindung. Wenn der funksensible Bereich verlassen wird, kann die Sendeeinheit ohne andere Geräte zu stören wieder eingeschaltet werden.

Bei dem erfindungsgemäßen Mobilfunkendgeräts sind Mittel zur Generierung von Identifikations- und/oder Lokalisierungsinformationen und zur Übermittlung dieser Identifikations- und/oder Lokalisierungsinformationen an eine Netzleitstelle bei Deaktivierung der Sendeeinheit vorgesehen. In dem Moment, wo die Sendeeinheit deaktiviert wird, können keine Signale mehr von dem Mobilfunkendgerät ausgehen. Die Sendeeinheit des Mobilfunkendgeräts sendet daher quasi als letzte Aktion an die Netzleitstelle, in welcher Funknetzzelle des auf Mobilfunknetzes sich das Mobilfunkendgerät zu dem Ausschaltzeitpunkt auffällt und um wessen Mobilfunkendgeräts es sich handelt. Damit werden die letzten Daten bezüglich des Mobilfunkendgeräts erfasst. Die Netzleitstelle kennt somit den letzten Aufenthaltsort des Teilnehmers.

Weiterhin ist eine Rufanforderungseinheit in dem Mobilfunkendgerät zum Informieren des Anwenders über eine Rufaufforderung vorgesehen sind. Durch diese Maßnahme wird dem Teilnehmer in dem funksensiblen Bereich signalisiert, dass er beispielsweise diesen Bereich verlassen und die Leitstelle kontaktieren soll. Damit kann auch eine Leitstelle Kontakt mit den Teilnehmern aufnehmen.

Für die erfindungsgemäße Netzleitstelle sind Erfassungs- und Speichermittel vorgesehen, zum Erfassen und Speichern von Informationen bezüglich des Aufenthaltsortes und/oder der Identifikation von Mobilfunkteilnehmern der Gruppe in dem Kommunikationsserver beim Abschalten der Sendeeinheit des Mobilfunkendgeräts.

Bei einer Gruppe von Mobilfunkteilnehmern, vorzugsweise mit jeweils ausgeschalteter Sendeeinheit, können nunmehr mit einer erfindungsgemäßen Netzleitstelle Informationen synchron übermittelt werden. Allen Mitgliedern dieser Gruppe kann gleichzeitig Information zukommen, obwohl sie selbst unter Umständen nicht agieren können.

Ein Aspekt der Erfindung ist, dass nunmehr Mittel zur Überwachung der Stärke eines Empfangssignals vorgesehen sind. Damit kann der Mobilfunkteilnehmer feststellen, ob sein Empfangssignal ausreichend stark ist, um noch Informationen, beispielsweise einer Leitstelle, zu erhalten. Sobald sich der Mobilfunkteilnehmer aus dem Empfangsbereich begibt, wird auf dem Mobilfunkendgerät in einer bevorzugten Ausführung der Erfindung signalisiert, dass das Empfangssignal zu schwach ist. Eine Signalisierungseinheit ist dafür vorgesehen, ein geringes und/oder fehlendes Empfangssignals zu signalisieren. Die Stärke des Empfangssignals kann beispielsweise auf einer Anzeige des Mobilfunkendgeräts dargestellt werden oder auch durch einen Signalton oder Vibrationsalarm dem Anwender verdeutlicht werden.

In einer weiteren vorteilhaften Ausgestaltung des erfindungsgemäßen Mobilfunkendgeräts ist ein Schalter zum Deaktivieren- und Aktivieren der Sendeeinheit vorgesehen. Dadurch kann der Mobilfunkteilnehmer manuell seine Sendeeinheit deaktivieren bzw. aktivieren.

Weitere Vorteile ergeben sich aus dem Gegenstand der Unteransprüche.

### Kurze Beschreibung der Zeichnung

- Fig. 1a: zeigt schematisch ein Mobilfunkendgerät mit geschlossenem Gehäuse und einer abschaltbaren Sendeeinheit.
- Fig. 1b: zeigt schematisch ein Mobilfunkendgerät mit geöffnetem Gehäuse und einer abschaltbaren Sendeeinheit.
- Fig. 2: zeigt in einer Prinzipskizze ein Mobilfunknetz mit einem funksensiblen Bereich und einer Leitstelle.

### Bevorzugtes Ausführungsbeispiel

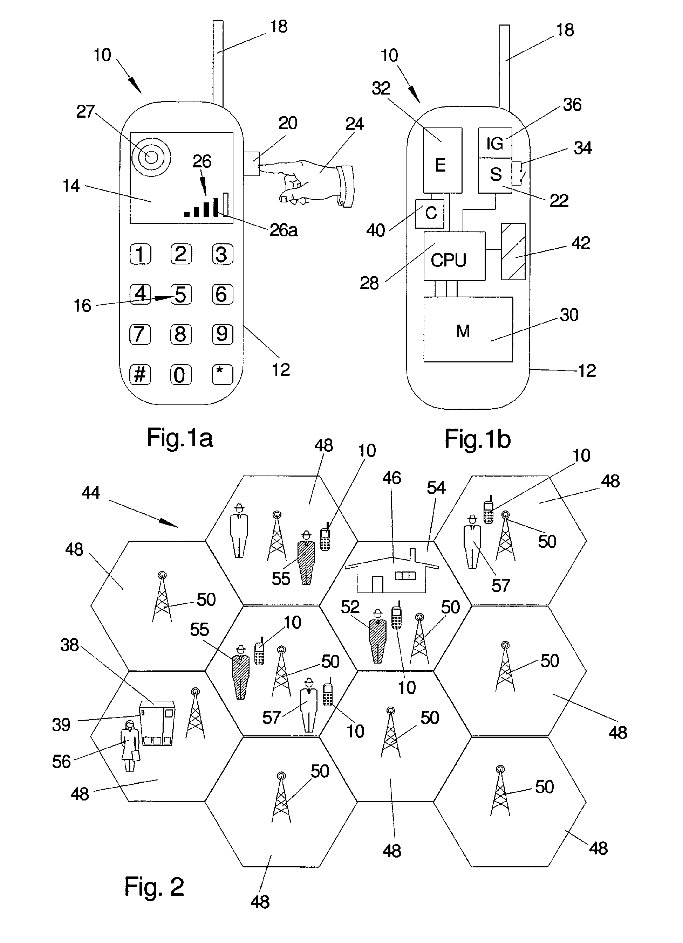

In Fig. 1a wird schematisch ein Mobilfunkendgerät 10 im geschlossenen Zustand dargestellt. Das Mobilfunkendgerät 10 verfügt über ein Gehäuse 12, einer Anzeige 14 und ein Bedienungsfeld 16. Aus dem Gehäuse 12 ragt eine Antenne 18 und ein Schaltknopf 20 zum manuellen Deaktivieren und Aktivieren der Sendeeinheit 22 (vgl. Fig. 1b) des Mobilfunkendgeräts 10. Eine Hand 24 betätigt diesen Schaltknopf 20. Auf der Anzeige 14 des Mobilfunkendgeräts 10 wird mit Balkendiagramm 26 dargestellt, wie stark das jeweils empfangene Funksignal ist. Je höher der Balken 26a steigt, desto stärker ist das Empfangssignal. Sollte das Empfangssignal zu gering oder sogar nicht vorhanden sein, so wird auf der Anzeige 14 beispielsweise ein Blinksignal 27 erzeugt.

Fig. 1b zeigt schematisch das Mobilfunkendgerät 10 entsprechend der Fig. 1a jedoch mit geöffnetem Gehäuse 12. in dem Gehäuse 12 des geöffneten Mobilfunkendgeräts 10 sind insbesondere ein Prozessor 28, ein Arbeitsspeicher 30, eine Empfangseinheit 32 und die Sendeeinheit 22 angeordnet. Die Bauelemente des Mobilfunkendgeräts 10 sind dazu üblicherweise auf einer nicht dargestellten Leiterplatine in geeigneter Weise miteinander verschaltet. Der Prozessor 28 dient im Wesentlichen dazu, das Mobilfunkendgerät 10 zu steuern und Arbeitsabläufe insbesondere zwischen den einzelnen Bauelementen des Mobilfunkendgeräts 10 zu koordinieren. Dabei werden Daten und Programme in dem Arbeitsspeicher 30, auf die der Prozessor 28 zugreifen kann, abgelegt. Die Empfangseinheit 32 sorgt dafür, dass Funksignale, welche über ein Mobilfunknetz übermittelt werden, über die Antenne 18 empfangen, decodiert und dem Prozessor 28 zur Verarbeitung weitergeleitet werden. Entsprechend sendet die Sendeeinheit 22 Daten an und über das Mobilfunknetz.

Mit Schaltmechanismus 34 kann in die Sendeeinheit 22 deaktiviert bzw. aktiviert werden. Die Betätigung des Schaltmechanismusses 34 erfolgt über den Schaltknopf 20. Sobald der Schaltmechanismus 34 die Sendeeinheit 22 deaktiviert hat, erzeugt ein Identifikationsgenerator 36 Daten bezüglich der Identität und des Aufenthaltes des Mobilfunkendgeräts 10. Diese werden bevor die Sendeeinheit 22 tatsächlich abschaltet an eine Netzleitstelle 38 (vgl. Fig. 2) übermittelt.

In dem Mobilfunkendgerät 10 ist ferner eine Überwachungseinheit 40 vorgesehenen, welche die Signalstärke der empfangenen Funksignale überwacht. Die Stärke der Empfangsignale wird auf der Anzeige 14 in Form des Balkendiagramms 26, wie oben beschriebenen, dargestellt. Sollte die Überwachungseinheit 40 feststellen, dass das Empfangssignal zu gering oder nicht vorhanden ist, so wird auf der Anzeige 14 beispielsweise das Blinksignal 18 und/oder ein Alarmton erzeugt.

Mit 42 wird eine Rufaufforderungseinheit bezeichnet. Diese Rufaufforderungseinheit 42 stellt fest, ob der Nutzer des Mobilfunkendgeräts 10, z.B. von der Netzleitstelle 38 aufgefordert wird, seine Sendeeinheit 22 wieder einzuschalten und mit der Netzleitstelle 38 Verbindung aufzunehmen. Dazu kann die Rufaufforderungseinheit 42 beispielsweise ein Alarmsignal erzeugen, auf welches der Nutzer reagieren kann.

Fig. 2 zeigt in einer Prinzipskizze einen beispielhaften Ausschnitt eines Mobilfunknetzes 44 mit einem funksensiblen Bereich 46. Das Mobilfunknetz 44 setzt sich aus zahlreichen Funknetzzellen 48 zusammen. Die Funknetzzellen 48 werden symbolisch als Sechsecke dargestellt. Jede Funknetzzelle 48 verfügt über eine Base Station 50, welche in vorliegender Abbildung durch einen Funkmast repräsentiert wird. In der Realität wird die Größe einer jeden Funknetzzelle 48 durch den Abdeckungsbereich der Base Station 50 definiert. Die Base Station 50 werden über nicht dargestellte Base Station Controller (BSC), so wie nicht dargestellte Vermittlungsstellen, (MSC) koordiniert. Im Zusammenspiel ermöglichen die Mobilfunknetzkomponenten ein Roaming eines Mobilfunkteilnehmers 52, d.h. ein Bewegen zwischen den Funknetzzellen 48.

Im vorliegenden Ausführungsbeispiel ist der funksensible Bereich 46 ein Krankenhaus. Die Erfindung soll aber sich nicht nur auf Krankenhäuser beschränken. Das Krankenhaus steht in einer einzelnen Funknetzzelle 54. Der Mobilfunkteilnehmer 52 der nun in das Krankenhaus, also den funksensiblen Bereich 46, geht, schaltet wie oben beschrieben die Sendeeinheit 22 seines Mobilfunkendgeräts 10 mit dem Schaltknopf 20 aus. Beim Deaktivierungsvorgang werden noch Daten bezüglich der Zeit, des Aufenthaltsortes, so wie weitere Identifikationsdaten bezüglich des Mobilfunkendgeräts 10 an die Netzleitstelle 38 gesendet. Das Bedienungspersonal 56 der Netzleitstelle 38 ist also über den letzten Aufenthaltsort des Mobilfunkteilnehmers 52, d.h. Funknetzzelle 54 mit dem funksensiblen Bereich 46, informiert. Die Netzleitstelle 38 verfügt über einen Kommunikationsserver 39, der die Kommunikation einer Gruppe 41 koordiniert.

Der Mobilfunkteilnehmer 52 kann aktiv nun keine Verbindung mit Dritten, insbesondere mit der Netzleitstelle 38 herstellen. Das Mobilfunkendgerät 10 des Mobilfunkteilnehmers 52 kann mit deaktivierter Sendeeinheit 22 jedoch noch Daten empfangen. Durch die abgeschaltete Sendeeinheit 22 werden nunmehr keine elektromagnetischen Strahlen von dem Mobilfunkendgerät 10 ausgesandt. Eine Störung funksensibler Geräte kann nunmehr vermieden werden.

Der Mobilfunkteilnehmer 52 ist Mitglied der Gruppe 41 von Mobilfunkteilnehmern 55. Die Mobilfunkteilnehmer 52, 55 der Gruppe 41 sind schraffiert dargestellt. Jedes Mitglied der Gruppe 41 kann somit auch mit ausgeschalteter Sendeeinheit 22 durch die Netzleitstelle 38 erreicht werden. Indem ein verschlüsselter Funkkanal für die Gruppe 41 durch das Mobilfunknetz 44 reserviert wird, kann die Netzleitstelle 38 Informationen an die Gruppenmitglieder 52, 55 übermitteln, ohne dass andere Mobilfunkteilnehmer 57 die Möglichkeit haben, davon Kenntnis nehmen zu können. Es ist in der Erfindung vorgesehen, dass die Netzleitstelle 38 die Gruppenmitglieder 52, 55 synchron erreichen kann.

## Patentansprüche

1. Mobilfunkendgerät (10) für ein Mobilfunknetz (44), wobei ein Mobilfunkteilnehmer (52) mit dem Mobilfunkendgerät (10) Mitglied einer Gruppe von Mobilfunkteilnehmern ist, deren Kommunikation von einer Netzleitstelle (38) koordiniert wird, und das Mobilfunkendgerät enthält:
a) eine Empfangs- (32) und Sendeeinheit (22),
b) einen Mikroprozessor (28) und einen Arbeitsspeicher (30),
c) eine Bedieneinheit (16) zum Bedienen des Mobilfunkendgeräts (10),
d) Mittel (20, 34) zum Aktivieren und/oder Deaktivieren der Sendeeinheit (22),
**gekennzeichnet durch**
e) Mittel (36) zur Generierung von Daten bezüglich der Zeit, des Aufenthaltsorts und der Identität des Mobilfunkendgeräts (10) bei einer Deaktivierung der Sendeeinheit (22) und zur Übermittlung dieser Daten an die Netzleitstelle (38) vor einer Abschaltung der Sendeeinheit (22), und
f) eine Rufaufforderungseinheit (42) zum Feststellen einer Aufforderung der Netzleitstelle (38) zum Einschalten der Sendeeinheit (22) und zum Aufnehmen einer Verbindung mit der Netzleitstelle (38) bei deaktivierter Sendeeinheit (22), und zum Erzeugen eines Alarmsignals bei einer festgestellten Aufforderung.

2. Mobilfunkendgerät (10) für ein Mobilfunknetz (44) nach Anspruch 1, **dadurch gekennzeichnet, dass** Mittel (26, 40) zur Überwachung der Stärke eines Empfangssignals vorgesehen sind.

3. Mobilfunkendgerät (10) für ein Mobilfunknetz (44) nach einem der Ansprüche 1 oder 2, **gekennzeichnet durch** eine Signalisierungseinheit (27) zum Signalisieren eines geringen und/oder fehlenden Empfangssignals.

4. Mobilfunkendgerät (10) für ein Mobilfunknetz (44) nach einem der Ansprüche 1 bis 3, **gekennzeichnet durch** einen Schalter (20) zum Deaktivieren- und Aktivieren der Sendeeinheit (22) des Mobilfunkendgeräts (10).

5. Netzleitstelle (38), welche über ein Mobilfunknetz (44 mit wenigstens einem Mobilfunkendgerät (10) mit einer deaktivierbaren Sendeeinheit (22) und aus einer Gruppe (41) von Mobilfunkteilnehmern (52, 55) gekoppelt ist, enthaltend:
a) wenigstens einen Kommunikationsserver (39) mit einem Prozessor und einem Arbeitsspeicher, und
b) Mittel zum synchronen Übermitteln von Information an die Mobilfunkendgeräte (10) der Gruppe (41) von Mobilfunkteilnehmern (52, 55),
**dadurch gekennzeichnet, dass**
c) Erfassungs- und Speichermittel vorgesehen sind, zum Erfassen und Speichern von Informationen bezüglich des Aufenthaltsortes, der Zeit und der Identifikation von Mobilfunkteilnehmern (52, 55) der Gruppe (41) in dem Kommunikationsserver (39) beim Abschalten der Sendeeinheit (22) des Mobilfunkendgeräts (10), und
d) die Netzleitstelle zum Übermitteln einer Aufforderung an das Mobilfunkendgerät (10) zum Einschalten der Sendeeinheit (22) und zum Aufnehmen einer Verbindung mit der Netzleitstelle (38) während ausgeschalteter Sendeeinheit (22) des Mobilfunkendgeräts (10) ausgebildet ist.

## Claims

1. A mobile terminal (10) for a mobile radio network (44), wherein a mobile telephone subscriber (52) possessing the mobile terminal (10) is a member of a group of mobile telephone subscribers whose communication is coordinated by a network control centre (38), and the mobile terminal comprises:
a) a receiver unit (32) and transmission unit (22),
b) a microprocessor (28) and a main memory (30),
c) an operating unit (16) for operating the mobile terminal (10),
d) means (20, 34) for activating and/or deactivating the transmission unit (22),
**characterized by**
e) means (36) for generating data with respect to the time, the local position and the identity of the mobile terminal (10) in case of a deactivation of the transmission unit (22) and for transmitting these data to the network control centre (38) before the transmission unit (22) is switched off, and
f) a call request unit (42) for determining a request of the network control centre (38) for switching on the transmission unit (22) and for establishing a connection to the network control centre (38) when the transmission unit (22) is switched off and for generating an alarm signal in case of a determined request.

2. A mobile terminal (10) for a mobile radio network (44) according to claim 1, **characterized in that** means (26, 40) for monitoring the strength of a receive signal are provided.

3. A mobile terminal (10) for a mobile radio network (44) according to one of the claims 1 or 2, **characterized by** a signalization unit (27) for signalizing a low and/or missing receive signal.

4. A mobile terminal (10) for a mobile radio network (44) according to one of the claims 1 through 3, **characterized by** a switch (20) for deactivating and activating the transmission unit (22) of the mobile terminal (10).

5. A network control centre (38) which is coupled via a mobile radio network (44) to at least one mobile terminal (10) comprising a transmission unit (22) that can be deactivated and belonging to a group (41) of mobile telephone subscribers (52, 55), comprising:
a) at least one communication server (39) comprising a processor and a main memory, and
b) means for the synchronous transmission of information to the mobile terminals (10) of the group (41) of mobile telephone subscribers (52, 55),
**characterized in that**
c) gathering and memorizing means are provided for gathering and memorizing information with respect to the local position, the time and the identification of mobile telephone subscribers (52, 55) of the group (41) in the communication server (39) when the transmission unit (22) of the mobile terminal (10) is switched off, and
d) the network control centre is designed to transmit a request to the mobile terminal (10) for switching on the transmission unit (22) and for establishing a connection to the network control centre (38) during the period in which the transmission unit (22) of the mobile terminal (10) is switched off.

## Revendications

1. Terminal mobile (10) pour un réseau radio mobile (44), dans lequel un abonné de téléphone mobile (52) en possession du terminal mobile (10) est un membre d'un groupe d'abonnés de téléphone mobile dont la communication est coordonnée par un centre de contrôle (38) et le terminal mobile comprend :
a) une unité de réception (32) et de transmission (22),
b) un microprocesseur (28) et une mémoire de travail (30),
c) une unité de commande pour commander un terminal mobile (10),
d) des moyens (20, 34) pour activer et/ou désactiver l'unité de transmission (22),
**caractérisé par**
e) des moyens (36) destinés à la génération des données par rapport à l'heure, à la position locale et à l'identité du terminal mobile (10) dans le cas d'une désactivation de l'unité de transmission (22) et destinés à la transmission de ces données au centre de contrôle du réseau (38) avant un débranchement de l'unité de transmission (22), et
f) une unité de demande d'appel (42) pour déterminer une demande du centre de contrôle du réseau (38) concernant la mise en marche de l'unité de transmission (22) et l'établissement d'une connexion au centre de contrôle du réseau (38) quand l'unité de transmission (22) est désactivée et la génération d'un signal d'alarme dans le cas d'une demande déterminée.

2. Terminal mobile (10) pour un réseau radio mobile (44) selon la revendication 1, **caractérisé en ce que** des moyens (26, 40) de surveillance de l'intensité d'un signal de réception sont prévus.

3. Terminal mobile (10) pour un réseau radio mobile (44) selon l'une des revendications 1 ou 2, **caractérisé par** une unité de signalisation (27) pour signaler un signal de réception faible et/ou manquant.

4. Terminal mobile (10) pour un réseau radio mobile (44) selon l'une des revendications 1 à 3, **caractérisé par** un interrupteur (20) pour désactiver et activer l'unité de transmission (22) du terminal mobile (10).

5. Centre de contrôle du réseau (38) qui est couplé par un réseau radio mobile (44) à au moins un terminal mobile (10) comprenant une unité de transmission (22) susceptible d'être désactivée et faisant partie d'un groupe (41) d'abonnés de téléphone mobile (52, 55), comprenant :
a) au moins un serveur de communication (39) comprenant un processeur et une mémoire de travail, et
b) des moyens de transmission synchrone des informations aux terminaux mobiles (10) du groupe (41) d'abonnés de téléphone mobile (52, 55),
**caractérisé en ce que**
c) des moyens de saisie et de mémorisation sont prévus pour saisir et mémoriser des informations par rapport à la position locale, à l'heure et à l'identification des abonnés de téléphone mobile (52, 55) d'un groupe (41) dans le serveur de communication (39) quand l'unité de transmission (22) du terminal mobile (10) est débranchée, et
d) le centre de contrôle du réseau est adapté à transmettre une demande au terminal mobile (10) concernant la mise en marche de l'unité de transmission (22) et l'établissement d'une connexion au centre de contrôle du réseau (38) pendant que l'unité de transmission (22) du terminal mobile (10) soit débranchée.
